# EUROPÄISCHE PATENTSCHRIFT

(11) **EP 2 880 114 B1**
(45) Veröffentlichungstag und Bekanntmachung des Hinweises auf die Patenterteilung: **29.06.2016**
(21) Anmeldenummer: 13747777.4
(22) Anmeldetag: 16.07.2013
(51) Int. Cl.: C09J 4/00, C09J 9/00, C09J 133/06, C09J 133/08, C08K 5/098

(54) **KLEBSTIFT UND VERFAHREN ZU DESSEN HERSTELLUNG**
ADHESIVE STICK AND METHOD FOR ITS PRODUCTION
BÂTON DE COLLE ET SON PROCÉDÉ DE RÉALISATION

(30) Priorität: 31.07.2012 AT 8492012
(43) Veröffentlichungstag der Anmeldung: 10.06.2015
(73) Patentinhaber: Kores CE GmbH, 1190 Wien (AT)
(72) Erfinder: MÜNSTER, Klaus, A-2331 Vösendorf (AT)
(74) Vertreter: Keschmann, Marc
(86) Internationale Anmeldenummer: PCT/AT2013/000118
(87) Internationale Veröffentlichungsnummer: WO 2014/019001

(56) Entgegenhaltungen:
- EP-A1- 1 847 581
- DE-A1- 10 148 077
- DE-A1-102009 012 667

## Beschreibung

Die Erfindung betrifft einen Klebestift aus einer wässrigen Zubereitung eines Acrylsäureester-Copolymers als klebende Komponente und einem Seifengel als gerüstbildende Substanz, wobei als Gelstruktur bildende Seife Natriumsalze von C₁₂- bis C₂₂-Fettsäuren, insbesondere C₁₄- bis C₁₈-Fettsäuren enthalten sind.

Die Erfindung betrifft weiters ein Verfahren zur Herstellung eines solchen Klebestifts.

Ein Klebestift und ein Verfahren zu dessen Herstellung sind aus der DE 10148077 A1 und der DE 102009012667 A1 bekannt.

Wie aus diesen Dokumenten hervorgeht, sind Klebestifte der eingangs genannten Art stäbchenförmige Klebstoffe, die in einer verschließbaren Hülle verschiebbar gelagert sind und beim Abreiben auf einer Substratoberfläche einen klebrigen Film hinterlassen. Sie enthalten beispielsweise wasserlösliche bzw. wasserdispergierbare synthetische Polymere mit Klebstoffcharakter, insbesondere Acrylsäureester-Copolymere gelöst in einer wässrig-organischen Flüssigphase, wie z.B. eine Polyacrylatdispersion, zusammen mit einer Form gebenden Gerüstsubstanz. Als Gerüstsubstanz werden insbesondere Fettsäuren des C-Zahlbereichs von 12 bis 22 verwendet. Werden die an sich hochklebrigen wässrigen Zubereitungen der Polymersubstanzen mit Klebstoffcharakter zusammen mit geringen Mengen der Gerüstsubstanz auf Basis von Fettsäureseifen auf höhere Temperaturen, insbesondere oberhalb 50°C, erwärmt und lässt man diese Lösung in Ruhestellung abkühlen, so erstarrt das Stoffgemisch zu einem mehr oder weniger steifen Seifengel, in dem die Form gebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Für die Qualität solcher Klebestifte sind die Applikationseigenschaften, insbesondere die Gleiteigenschaften und der Abrieb beim Auftragen, die Klebeeigenschaften und die Langzeitstabilität ausschlaggebend. Generell gilt, dass die Klebeeigenschaften schlechter sind, je härter der Klebestift ist. Umgekehrt verschlechtert ein zu weicher Stift die Auftragbarkeit. Gleichzeitig muss bei der Herstellung des Klebestifts die Viskosität des die wässrigen Zubereitung eines Acrylsäureester-Copolymers und die C₁₂- bis C₂₂-Fettsäuren als gerüstbildende Bestandteile enthaltenden Stoffgemisches innerhalb der gewünschten Grenzen gehalten werden, damit die Verarbeitbarkeit gewährleistet ist.

Die Erfindung zielt daher darauf ab, einen Klebestift so auszugestalten, dass den oben genannten Kriterien optimal Rechnung getragen werden kann.

Zur Lösung dieser Aufgabe sieht die Erfindung bei einem Klebestift der eingangs genannten Art vor, dass der Acrylsäureester einen Acrylsäuregehalt von 10 - 25%, bevorzugt 10 - 20%, bevorzugt 15 - 20% aufweist. Die Erfindung beruht auf der Erkenntnis, dass der Acrylsäuregehalt für die verdickenden Eigenschaften verantwortlich ist, wobei gefunden wurde, dass ein Mindestgehalt von 10% erforderlich ist, um einen Kompromiss zwischen guten Applikationseigenschaften und ausreichender Klebekraft zu erzielen. Ein zu hoher Acrylsäureanteil würde wiederum die Verarbeitbarkeit während des Herstellungsprozesses verschlechtern.

Besonders vorteilhaft ist es, wenn die wässrige Zubereitung eines Acrylsäureester-Copolymers freie Säuregruppen, insbesondere Carboxylgruppen aufweist. Die Verdickung des die wässrigen Zubereitung eines Acrylsäureester-Copolymers und die C₁₂- bis C₂₂-Fettsäuren als gerüstbildende Bestandteile enthaltenden Stoffgemisches setzt mit der Zugabe des Natriumhydroxids und der dadurch bewirkten Neutralisation der Fettsäuren und ggf. der freien Säuregruppen ein.

Weiters wurde gefunden, dass die Auswahl der Fettsäuren positive Auswirkungen auf die erzielbare Härte des Klebestiftes zeigt. Insbesondere wurde festgestellt, dass ein zu hoher Anteil reiner Stearinsäure zu Klebestiften führt, die zu weich sind und demzufolge keine optimalen Applikationseigenschaften aufweisen. Der erfindungsgemäße Klebestift ist daher bevorzugt derart weitergebildet, dass die C₁₂- bis C₂₂-Fettsäuren, insbesondere C₁₄- bis C₁₈-Fettsäuren zu 30 - 50 Gew.-%, insbesondere zu 40 - 50 Gew.-% aus Stearinsäure bestehen, wobei der Rest bevorzugt größtenteils von Palmitinsäure und geringen Mengen Myristinsäure gebildet wird. In der Praxis handelt es sich also beispielsweise um unreine Stearinsäure, die neben dem genannten Anteil an reiner Stearinsäure auch andere Fettsäuren, insbesondere Palmitin- und Myristinsäure enthält.

Hinsichtlich der absoluten Menge an Fettsäuren sieht eine bevorzugte Weiterbildung der Erfindung vor, dass die Natriumsalze von C₁₂- bis C₂₂-Fettsäuren, insbesondere C₁₄- bis C₁₈ Fettsäuren in Mengen von 3 - 8 Gew.-%, insbesondere 5 - 8 Gew.-%, bezogen auf die Gesamtmasse des Stiftes, enthalten sind.

Um gute Klebeigenschaften zu erzielen, ist bevorzugt vorgesehen, dass die wässrige Zubereitung eines Acrylsäureester-Copolymers, insbesondere eine Polyacrylatdispersion in einer Menge von 45 - 60 Gew.-%, insbesondere 50 - 60 Gew.-%, bezogen auf die Gesamtmasse des Stiftes, enthalten ist.

Zusätzlich zu den bisher genannten Hauptbestandteilen des erfindungsgemäßen Klebestifts können mit Vorteil weitere Bestandteile, insbesondere in geringeren Mengen, vorhanden sein. Die Ausbildung ist in diesem Zusammenhang bevorzugt so getroffen, dass die wässrige Zubereitung eines Acrylsäureester-Copolymers Saccharose enthält. Der Anteil der Saccharose kann zwischen 5 und 30 Gew.-% bezogen auf die Gesamtmasse des Stiftes liegen.

Weiters kann die wässrige Zubereitung eines Acrylsäureester-Copolymers auch Polyurethandispersionen enthalten. Der Anteil der Polyurethandispersionen kann zwischen 5 und 30 Gew.-% bezogen auf die Gesamtmasse des Stiftes liegen.

Außerdem kann die wässrige Zubereitung eines Acrylsäureester-Copolymers Stärkeether enthalten. Der Anteil des Stärkeethers kann zwischen 5 und 40 Gew.-% bezogen auf die Gesamtmasse des Stiftes liegen. Der Anteil des Stärkeethers kann insbesondere von der Viskosität des Stoffgemisches abhängen, wobei mit steigender Viskosität ein geringerer Anteil des Stärkeethers erforderlich ist.

Weiters können übliche Hilfsstoffe wie Weichmacher, Farbstoffe, Pigmente, Duftstoffe, Konservierungsmittel und/oder feuchtigkeitsregulierende Stoffe enthalten sein. Als Weichmacher und/oder feuchtigkeitsregulierender Stoff kommt bevorzugt Monopropylenglycol in Frage.

Das erfindungsgemäße Verfahren zur Herstellung eines Klebestifts ist dadurch gekennzeichnet, dass C₁₂- bis C₂₂-Fettsäuren, insbesondere C₁₄- bis C₁₈-Fettsäuren als gerüstbildende Bestandteile und eine wässrige Zubereitung eines Acrylsäureester-Copolymers mit einem Acrylsäuregehalt von 10 - 25%, bevorzugt 10 - 20%, bevorzugt 15 - 20% und ggf. Hilfsstoffe vermischt und auf Temperaturen von wenigstens 50°C, vorzugsweise auf bis zu 80°C erwärmt werden, bis eine gleichmäßige, klare Mischung entstanden ist, dass danach eine zur Neutralisation der Fettsäuren und ggf. der freien Säuregruppen erforderliche Menge Natriumhydroxid zugegeben wird und dass anschließend homogenisiert wird, wonach die Mischung in Formen gegossen und ohne mechanische Beeinflussung unter Gelbildung abgekühlt wird. Bevorzugte Weiterbildungen des Verfahrens ergeben sich aus den oben im Zusammenhang mit dem erfindungsgemäßen Klebestift angeführten Merkmalen und Bestandteilen.

Die Erfindung wird nachfolgend anhand der nachfolgenden Ausführungsbeispiele erläutert, wobei verschiedene Acrylsäureanteile und verschiedene Stearinsäureanteile gegenübergestellt werden.

Es wurden Klebestifte mit den in Tabelle 1 angegebenen Zusammensetzungen formuliert.

**Tabelle 1**

| | Acrylsäureanteil 10% | | | Acrylsäureanteil 15% | | | Acrylsäureanteil 18% | | |
|---|---|---|---|---|---|---|---|---|---|
| | Klebestift 1 | Klebestift 2 | Klebestift 3 | Klebestift 4 | Klebestift 5 | Klebestift 6 | Klebestift 7 | Klebestift 8 | Klebestift 9 |
| Polyacrylat-Dispersion | 56 | 60 | 52 | 50 | 52 | 49 | 48 | 45 | 47 |
| Additive | 0,4 | 0,4 | 0,4 | 0,4 | 0,4 | 0,4 | 0,4 | 0,4 | 0,4 |
| Stearinsäure 40% | 8 | | | 6 | | | 5 | | |
| Stearinsäure 50% | | 6,5 | | | 5 | | | 4 | |
| Stearinsäure 98% | | | 4,1 | | | 3,1 | | | 3 |
| Monopropylenglycol | 2 | 2 | 2 | 2 | 2 | 2 | 2 | 2 | 2 |
| NaOH 15% | 28,5 | 21 | 15,4 | 30 | 26 | 21 | 33 | 28 | 24 |
| Restmenge Wasser auf 100 Gew.-% | | | | | | | | | |
| | | | | | | | | | |
| Penetration in mm | 5,9 | 8,2 | 11,5 | 6,1 | 8,5 | 11,9 | 7,5 | 9,4 | >12 |
| | | | | | | | | | |
| Applikation | gleitet sehr gut | gleitet mäßig | schmiert | gleitet sehr gut | gut | schmiert | gut | schmiert | schmiert |
| Gemessener Gleitwert | 4,2 | 25 | 75 | 6,7 | 14 | 115 | 18 | 39 | 254 |
| | | | | | | | | | |
| Aussehen | weiß | weiß | weiß | weiß | weiß | weiß | weiß | weiß | weiß |

"Stearinsäure 40%" bedeutet hierbei, dass eine Mischung verschiedener Fettsäuren mit einem Stearinsäureanteil von 40 Gew.-% vorliegt, wobei der Rest bevorzugt größtenteils von Palmitinsäure und geringen Mengen Myristinsäure gebildet wird. Analoges gilt für die Angabe "Stearinsäure 50%" und "Stearinsäure 98%", wobei jeweils ein Stearinsäureanteil von 50 Gew.-% bzw. 98 Gew.-% vorliegt.

Es ist ersichtlich, dass sich der Penetrationswert bei gleichbleibendem Acrylsäureanteil mit steigendem Stearinsäureanteil erhöht, der Klebestift also weicher wird. Dementsprechend ändern sich der Gleitwert und die Applikationseigenschaften. Optimale Eigenschaften werden mit einem Stearinsäureanteil von 40 Gew.-% erreicht. Hinsichtlich des Acrylsäureanteils zeigt sich, dass sich mit einem Anteil von 10 - 18 Gew.-% innerhalb des gesamten Bereichs sehr gute bzw. gute Eigenschaften ergeben.

Um die Klebeeigenschaften bei allen Klebestiftzusammensetzungen in etwa gleich zu gestalten, wurde die Menge der eingesetzten Polyacrylatdispersion mit steigendem Acrylsäureanteil reduziert.

Um die Vergleichbarkeit zu gewährleisten, wurde weiters die Menge der Fettsäuren mit steigendem Acrylsäureanteil reduziert.

Mit steigendem Acrylsäureanteil wurde jedoch die Menge des eingesetzten NaOH erhöht, um eine vollständige Neutralisation der freien Säuregruppen zu gewährleisten.

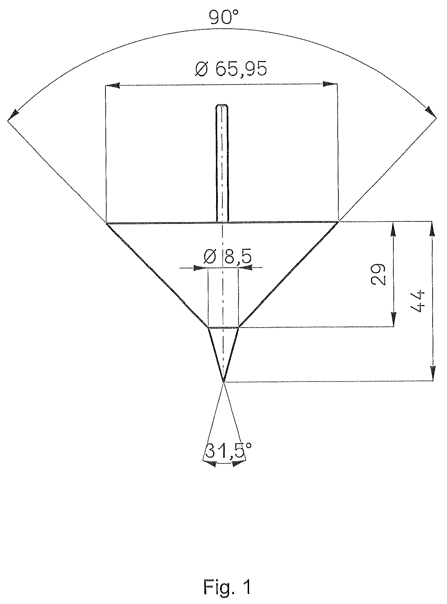

Die Penetration ist das Maß für die Härte der Klebestifte. Die Penetration wurde mit einem Gerät der Firma Tuninetto, Type 321, Barcelona, gemessen. Zur Messung wurde der Klebestift 10 mm aus der Hülse gedreht und so unter einer Stahlstiftnadel (siehe Fig. 1) platziert, dass dieser gerade die Masse berührte. Anschließend wurde die Nadel für 5 Sekunden mit einem Gewicht von 250 g belastet und die Eindringtiefe der Nadel in mm gemessen. Je höher die Eindringtiefe war, umso weicher ist der Klebestift.

In Fig. 1 ist die für die Messung der Penetration verwendete Stahlstiftnadel dargestellt.

Zur Ermittlung des Gleitwerts wurden die folgenden Hilfsmittel verwendet:
1) Klebemaschine samt Zubehör
2) A4 Papier 80g/m²
3) Stoppuhr
4) Klebestift

Es wurde bei einer Temperatur von 19-24°C und einer relativen Luftfeuchtigkeit von 20 - 70% gearbeitet.

Bei der Ermittlung des Gleitwerts wurde wie folgt vorgegangen:
1) Die A4 Blätter wurden in Streifen von 297 mm x ca 42 mm geschnitten. Aus einem A4 Blatt wurden 5 Streifen hergestellt.
2) Der Papierstreifen wurde auf der Grundplatte der Klebemaschine positioniert.
3) Das Papier wurde mittels eines Befestigungswürfels auf der Grundplatte fixiert. Es war darauf zu achten, dass das Papier ausgespannt wird.
4) Auf die Maschinenplatte wurde ein verfahrbare Wagen angebracht.
5) In den Wagenschlitz wurde eine Distanzeinlage hineingelegt. Diese wird für folgende Klebstoffgrammagen verwendet: - 8g, 10g, 15g, 20g.
   Für 40g Klebstoff wird die Distanzeinlage nicht verwendet.
6) Das Gewicht für den Wagenverschub wurde nach der Klebstoff-Grammage gewählt.
   8-10g - Gewicht 300g;
   15-20g - Gewicht 500g;
   40g - Gewicht 900g
7) Für den Wagenverschub wurde eine Schnur verwendet. Ein Schnurende wurde mittels eines Hakens in der Wagenöffnung befestigt und am zweiten Schnurende wurde das Gewicht befestigt. Die Schnur wurde über eine Umlenkrolle geführt.
8) Beim zu testenden Klebstoff wurde ein ca. 10 mm starker Streifen weggeschnitten.
9) Der Klebstoff wurde gerade, entlang der Ebene des Tubenstutzens zurecht geschnitten.
10) Nach dem Abschneiden wurde der Klebstoff um 5 mm +/- 1 mm aus der Tube hinausgedreht.
11) Der Klebstoff wurde in eine Hülse eingelegt und mittels einer Seitenschraube wurde der Klebstoff durch leichtes Anziehen in der Hülse fixiert. Das Gewicht der Hülse wurde nach der Klebstoff-Grammage so ausgewählt, dass der Klebstoff mit einem vertikalen Druck von 250g/cm² auf das Papier angedrückt wird.
12) Der Wagen mit dem Gewicht wurde in die "START"-Lage ausgefahren und der vorbereitete, in der Hülse fixierte Klebstoff wurde hineingelegt, sodass das Gewicht der Hülse für den erforderlichen Druck des Klebstoffs auf das Papier sorgt.
13) Der Wagen mit dem Klebstoff wurde mit einer Hand in der "START" Lage gehalten. In der zweiten Hand wurde die Stoppuhr gehalten.
14) Der Wagen wurde gelöst und zugleich wurde die Stoppuhr gestartet.
15) Es wurde die Zeit gemessen, in welcher der Wagen - angetrieben durch das über die Umlenkrolle geführte Gewicht - von der "START" in die "STOP" Lage verfährt. Die Länge der aufgetragenen Klebstoffspur betrug ca. 160 mm.
16) Der gesamte Vorgang wurde zweimal wiederholt. Der Klebstoff wurde nicht mehr abgeschnitten.
17) Auf diese Art und Weise wurden insgesamt drei Gleitfähigkeitswerte ermittelt. Diese Werte wurden schließlich gemittelt. Der in Tabelle 1 eingetragene Gleitwert entspricht der gemessenen Zeit in Sekunden.

## Patentansprüche

1. Klebestift aus einer wässrigen Zubereitung eines Acrylsäureester-Copolymers als klebende Komponente und einem Seifengel als gerüstbildende Substanz, wobei als Gelstruktur bildende Seife Natriumsalze von C₁₂- bis C₂₂-Fettsäuren, insbesondere C₁₄- bis C₁₈-Fettsäuren enthalten sind, **dadurch gekennzeichnet, dass** das Acrylsäureester-Copolymer einen Acrylsäuregehalt von 10 - 20 Gew.-%, bevorzugt 15 - 20 Gew.-% aufweist und die C₁₂- bis C₂₂-Fettsäuren, insbesondere C₁₄- bis C₁₈-Fettsäuren zu 30 - 50 Gew.-%, insbesondere zu 40 - 50 Gew.-% aus Stearinsäure bestehen, wobei der Rest bevorzugt von Palmitin- und geringen Mengen Myristinsäure gebildet wird.

2. Klebestift nach Anspruch 1, **dadurch gekennzeichnet, dass** die wässrige Zubereitung eines Acrylsäureester-Copolymers freie Säuregruppen, insbesondere Carboxylgruppen aufweist.

3. Klebestift nach Anspruch 1 oder 2, **dadurch gekennzeichnet, dass** die Natriumsalze von C₁₂- bis C₂₂-Fettsäuren, insbesondere C₁₄- bis C₁₈ Fettsäuren in Mengen von 3 8 Gew.-%, insbesondere 5 - 8 Gew.-%, bezogen auf die Gesamtmasse des Stiftes, enthalten sind.

4. Klebestift nach Anspruch 1, 2 oder 3, **dadurch gekennzeichnet, dass** die wässrige Zubereitung eines Acrylsäureester-Copolymers, insbesondere eine Polyacrylatdispersion in einer Menge von 45 - 60 Gew.-%, insbesondere 50 - 60 Gew.-%, bezogen auf die Gesamtmasse des Stiftes, enthalten ist.

5. Klebestift nach einem der Ansprüche 1 bis 4, **dadurch gekennzeichnet, dass** die wässrige Zubereitung eines Acrylsäureester-Copolymers Saccharose enthält.

6. Klebestift nach einem der Ansprüche 1 bis 5, **dadurch gekennzeichnet, dass** die wässrige Zubereitung eines Acrylsäureester-Copolymers Polyurethandispersionen enthält.

7. Klebestift nach einem der Ansprüche 1 bis 6, **dadurch gekennzeichnet, dass** die wässrige Zubereitung eines Acrylsäureester-Copolymers Stärkeether enthält.

8. Klebestift nach einem der Ansprüche 1 bis 7, **dadurch gekennzeichnet, dass** weiters Hilfsstoffe wie Weichmacher, Farbstoffe, Pigmente, Duftstoffe, Konservierungsmittel und/oder feuchtigkeitsregulierende Stoffe enthalten sind.

9. Klebestift nach Anspruch 8, **dadurch gekennzeichnet, dass** als Weichmacher Monopropylenglycol enthalten ist.

10. Verfahren zur Herstellung eines Klebestifts nach einem der Ansprüche 1 bis 9, **dadurch gekennzeichnet, dass** C₁₂- bis C₂₂-Fettsäuren, insbesondere C₁₄- bis C₁₈-Fettsäuren als gerüstbildende Bestandteile und eine wässrige Zubereitung eines Acrylsäureester-Copolymers mit einem Acrylsäuregehalt von 10 - 25 Gew.-%, bevorzugt 10 - 20 Gew.-%, bevorzugt 15 - 20 Gew.-% und ggf. Hilfsstoffe vermischt und auf Temperaturen von wenigstens 50°C, vorzugsweise auf bis zu 80°C erwärmt werden, bis eine gleichmäßige, klare Mischung entstanden ist, dass danach eine zur Neutralisation der Fettsäuren und ggf. der freien Säuregruppen erforderliche Menge Natriumhydroxid zugegeben wird und dass anschließend homogenisiert wird, wonach die Mischung in Formen gegossen und ohne mechanische Beeinflussung unter Gelbildung abgekühlt wird.

## Claims

1. A glue stick made from an aqueous preparation of an acrylic acid ester copolymer as the adhesive component and a detergent gel as the structure-forming substance, wherein sodium salts of C₁₂ to C₂₂ fatty acids, particularly C₁₄ to C₁₈ fatty acids, are contained as the gel structure-forming detergent, **characterized in that** the acrylic acid ester copolymer has an acrylic acid content of 10 - 20 wt%, preferably 15 - 20 wt% and the C₁₂ to C₂₂ fatty acids, particularly C₁₄ to C₁₈ fatty acids, contain up to 30 - 50 wt%, particularly up to 40 - 50 wt%, stearic acid, wherein the remainder is preferably formed from palmitic acid and small quantities of myristic acid.

2. The glue stick according to claim 1, **characterized in that** the aqueous preparation of an acrylic acid ester copolymer has free acid groups, particularly carboxyl groups.

3. The glue stick according to claim 1 or 2, **characterized in that** the sodium salts of C₁₂ to C₂₂ fatty acids, particularly C₁₄ to C₁₈ fatty acids, are contained in quantities of 3 - 8 wt%, particularly 5 - 8 wt%, relative to the total mass of the stick.

4. The glue stick according to claim 1, 2 or 3, **characterized in that** the aqueous preparation of an acrylic acid ester copolymer, particularly a polyacrylate dispersion, is contained in a quantity of 45 - 60 wt%, particularly 50 - 60 wt%, relative to the total mass of the stick.

5. The glue stick according to one of the claims 1 to 4, **characterized in that** the aqueous preparation of an acrylic acid ester copolymer contains sucrose.

6. The glue stick according to one of the claims 1 to 5, **characterized in that** the aqueous preparation of an acrylic acid ester copolymer contains polyurethane dispersions.

7. The glue stick according to one of the claims 1 to 6, **characterized in that** the aqueous preparation of an acrylic acid ester copolymer contains starch ether.

8. The glue stick according to one of the claims 1 to 7, **characterized in that** adjuncts such as softeners, dyes, pigments, fragrances, preservatives and/or moisture-regulating substances are further contained.

9. The glue stick according to claim 8, **characterized in that** monopropylene glycol is contained as the softener.

10. A method for producing a glue stick according to one of the claims 1 to 9, **characterized in that** C₁₂ to C₂₂ fatty acids, particularly C₁₄ to C₁₈ fatty acids, as structure-forming parts are blended with an aqueous preparation of an acrylic acid ester copolymer with an acrylic acid content of 10 - 25 wt%, preferably 10 - 20 wt%, preferably 15 - 20 wt%, and additives if necessary and heated to temperatures of at least 50°C, preferably to up to 80°C, until a clear, uniform mixture is created, that a quantity of sodium hydroxide required to neutralize the fatty acids and the free acid groups if necessary is subsequently added and that it is then homogenized, after which the mixture is cast in moulds and cooled without any mechanical influence to form a gel.

## Revendications

1. Bâton de colle constitué d'une préparation aqueuse d'un copolymère d'un ester d'acide acrylique servant de composant adhésif et d'un gel de savon servant de substance de structuration, contenant en tant que savon formant la structure du gel des sels de sodium d'acides gras en C₁₂ à C₂₂, en particulier d'acides gras en C₁₄ à C₁₈, **caractérisé en ce que** le copolymère d'un ester d'acide acrylique présente une teneur en acide acrylique de 10 à 20 % en poids, de préférence de 15 à 20 % en poids, et **en ce que** les acides gras en C₁₂ à C₂₂, en particulier les acides gras en C₁₄ à C₁₈, sont constitués d'acide stéarique à raison de 30 à 50 % en poids, en particulier de 40 à 50 % en poids, le reste étant de préférence formé d'acide palmitique et de faibles quantités d'acide myristique.

2. Bâton de colle selon la revendication 1, **caractérisé en ce que** la préparation aqueuse d'un copolymère d'un ester d'acide acrylique contient des groupes acide libres, en particulier des groupes carboxyle.

3. Bâton de colle selon la revendication 1 ou 2, **caractérisé en ce que** les sels de sodium d'acides gras en C₁₂ à C₂₂, en particulier d'acides gras en C₁₄ à C₁₈, sont contenus en des quantités de 3 à 8 % en poids, en particulier de 5 à 8 % en poids, sur la base de la masse totale du bâton.

4. Bâton de colle selon la revendication 1, 2 ou 3, **caractérisé en ce que** la préparation aqueuse d'un copolymère d'un ester d'acide acrylique, en particulier une dispersion de polyacrylate, est contenue en une quantité de 45 à 60 % en poids, en particulier de 50 à 60 % en poids, sur la base de la masse totale du bâton.

5. Bâton de colle selon l'une des revendications 1 à 4, **caractérisé en ce que** la préparation aqueuse d'un copolymère d'un ester d'acide acrylique contient du saccharose.

6. Bâton de colle selon l'une des revendications 1 à 5, **caractérisé en ce que** la préparation aqueuse d'un copolymère d'un ester d'acide acrylique contient des dispersions de polyuréthane.

7. Bâton de colle selon l'une des revendications 1 à 6, **caractérisé en ce que** la préparation aqueuse d'un copolymère d'un ester d'acide acrylique contient des éthers d'amidon.

8. Bâton de colle selon l'une des revendications 1 à 7, **caractérisé en ce que** des auxiliaires de traitement supplémentaires sont présents, tels que des plastifiants, des colorants, des pigments, des substances odorantes, des conservateurs et/ou des substances de régulation de l'humidité.

9. Bâton de colle selon la revendication 8, **caractérisé en ce qu'**il contient en tant que plastifiant du monopropylèneglycol.

10. Procédé de fabrication d'un bâton de colle selon l'une des revendications 1 à 9, **caractérisé en ce qu'**on mélange des acides gras en C₁₂ à C₂₂, en particulier des acides gras en C₁₄ à C₁₈, en tant que constituants de structuration, et une préparation aqueuse d'un copolymère d'un ester d'acide acrylique ayant une teneur en acide acrylique de 10 à 25 % en poids, de préférence de 10 à 20 % en poids, de préférence de 15 à 20 % en poids, et éventuellement des auxiliaires de traitement, et qu'on les chauffe à des températures d'au moins 50 °C, de préférence jusqu'à 80 °C, jusqu'à obtention d'un mélange uniforme et limpide, **en ce que** l'on ajoute ensuite une quantité d'hydroxyde de sodium nécessaire à la neutralisation des acides gras et éventuellement des groupes acide libres, puis **en ce que** l'on procède à une homogénéisation, après laquelle le mélange est versé dans des moules et refroidi en formant un gel sans sollicitation mécanique.
